Europäisches Patentamt

European Patent Office

Office européen des brevets

(19)

(11)  **EP 0 688 589 B1**

(12)  **FASCICULE DE BREVET EUROPEEN**

(45) Date de publication et mention
de la délivrance du brevet:
**24.05.2000  Bulletin 2000/21**

(51) Int Cl.[7]: **B01D 15/02**

(21) Numéro de dépôt: **95401408.0**

(22) Date de dépôt: **15.06.1995**

(54) **Procédé de séparation par chromatographie en lit mobile simulé avec correction de volume mort par désynchronisation des périodes**

Trennverfahren mittels simulierter Wanderbettchromatographie mit Korrektur des Totvolumens durch Desynchronisation der Perioden

Separation process by simulated moving bed chromatography with correction for dead volume by desynchronisation of periods

(84) Etats contractants désignés:
**BE CH DE ES GB IT LI NL**

(30) Priorité: **22.06.1994  FR 9407763**

(43) Date de publication de la demande:
**27.12.1995   Bulletin 1995/52**

(73) Titulaires:
• **INSTITUT FRANCAIS DU PETROLE**
**92502 Rueil-Malmaison (FR)**
• **SEPAREX**
**F-54250 Champigneulles (FR)**

(72) Inventeurs:
• **Hotier, Gérard**
**F-92500 Rueil Malmaison (FR)**
• **Nicoud, Roger-Marc**
**F-54630 Richardmesnil (FR)**

(74) Mandataire: **Andreeff, François**
**INSTITUT FRANCAIS DU PETROLE**
**4, avenue de Bois-Préau**
**92502 Rueil-Malmaison (FR)**

(56) Documents cités:
EP-A- 0 415 821          WO-A-84/02854
WO-A-90/06796

**Description**

La présente invention est relative à un procédé de fractionnement de mélanges fluides de composants, effectué par une méthode de chromatographie.

Elle s'applique notamment à la séparation des hydrocarbures aromatiques à huit atomes de carbone.

La chromatographie est basée sur le fait suivant : certains solides poreux, en présence de mélanges liquides, gazeux ou supercritiques ont la propriété de retenir plus ou moins fortement les différents constituants du mélange. Les procédés de séparation basés sur la chromatographie sont le plus souvent mis en oeuvre de la manière suivante : le solide poreux, de granulométrie déterminée est contenu dans un récipient généralement cylindrique, la colonne ; il constitue la phase stationnaire. Le mélange à séparer est percolé sur la colonne, les différents constituants sortent successivement selon qu'ils sont retenus plus ou moins fortement par la phase stationnaire.

L'art antérieur est illustré par le brevet EP-A-0415821, qui décrit un procédé de séparation chromatographique d'un mélange d'au moins trois constituants en trois effluents au moyen de deux solvants. Le brevet WO-A-8402854 décrit l'utilisation périodique d'un flux renversé pour éviter le compactage de lit d'adsorbant. Enfin, le brevet WO-A-9006796 décrit une méthode pour augmenter la densité des lits d'adsorbant.

Le procédé de séparation concerné par cette invention est le procédé par chromatographie en lit mobile simulé, à contre-courant ou à co-courant, tel que décrit notamment dans les brevets US-A-2985589, US-A-4402832 et US-A-4498991.

Aucun de ces brevets ne décrit ni ne suggère la manière de compenser les volumes morts dans la boucle de recyclage.

L'invention est illustrée par les figures suivantes, parmi lesquelles :

- la figure 1 montre le principe d'une séparation en contre-courant réel,
- les figures 2A, 2B, 2C montrent le fonctionnement d'un contre-courant simulé,
- la figure 3 montre un lit mobile simulé où la pompe de recyclage est solidaire du $n^{\text{ème}}$ lit ou tronçon de colonne,
- la figure 4 montre les variations de composition C (% poids) d'échantillons d'extrait prélevés au même instant de chacune des périodes T du cycle en fonction du numéro de période dans le cycle (modulo 24),
- la figure 5 montre les variations de la composition moyenne C (% poids) de l'extrait pour chacune des périodes du cycle en fonction du numéro de période NP dans le cycle, sans compensation de volume mort, et
- la figure 6 montre les variations de la composition moyenne C (% poids) de l'extrait pour chacune des périodes du cycle en fonction du numéro de période NP dans le cycle, lorsque la compensation selon l'invention est appliquée.

Une manière d'expliquer le fonctionnement d'un procédé de séparation par chromatographie en lit mobile simulé consiste à le représenter par un contre-courant réel équivalent.

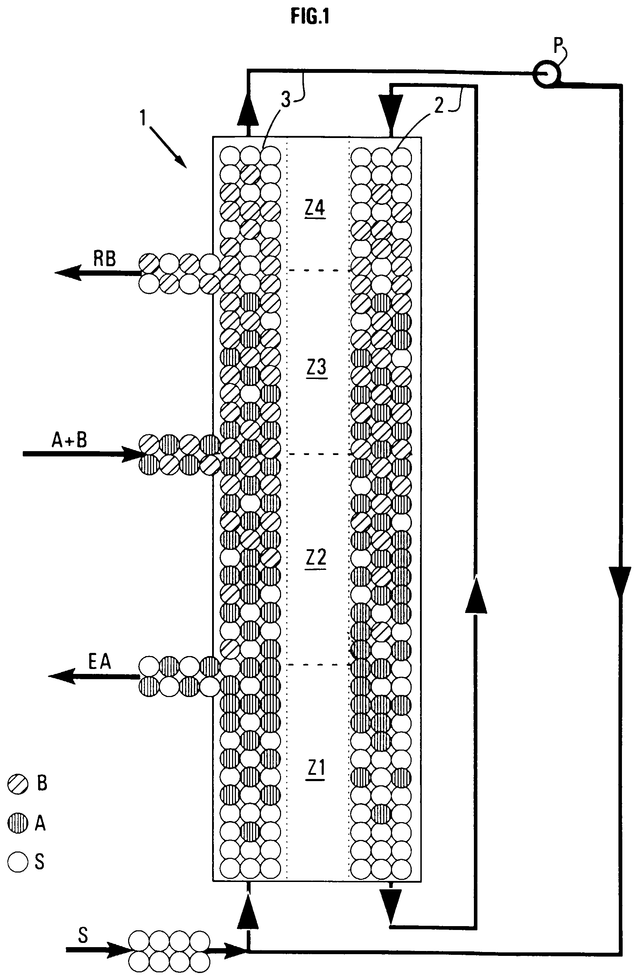

Dans le contre-courant réel, représenté par la figure 1 avec quatre zones Z1, Z2, Z3 et Z4, un profil des concentrations fixe et constant se développe dans une colonne 1 de séparation, où la position des points d'injection d'une charge A + B , d'un éluant S, et de soutirage d'un extrait EA et d' un raffinat RB reste fixe, tandis que le solide adsorbant 2 et le liquide 3 se déplacent à contre-courant. Dans ce procédé, une pompe P de recyclage permet de renvoyer le liquide du point haut au point bas de la colonne, tandis qu'un système tel qu'un lit entraîné, par exemple, permet de renvoyer le solide du point bas au point haut. Ces deux systèmes occupent vis-à-vis du profil de concentration le point où la seule espèce présente tant dans le liquide que dans le solide est l'éluant d'élution. Ce point se rencontre à la jonction des zones I et IV (voir figure 1). Dans cette situation, les volumes de liquide et de solide engagés dans les systèmes de recyclage sont strictement indifférents puisque, seule une espèce étant présente, les effets de rétromélange (backmixing) sont sans conséquence.

Le succès des procédés de séparation par chromatographie en lit mobile simulé tient à la difficulté de faire correctement circuler un solide sans créer d'attrition et sans augmenter considérablement la porosité de lit par rapport à un lit fixe. Dans les procédés en lit mobile simulé, le solide est disposé dans un certain nombre n de lits fixes, dans la pratique n est en général compris entre quatre et vingt-quatre. La différence majeure entre les procédés en contre-courant réel et ceux en lit mobile simulé tient au fait que dans ces derniers, le profil des concentrations n'est plus fixe mais qu'il se déplace à vitesse uniforme tout autour d'une boucle fermée constituée des n lits fixes ou colonnes chromatographiques disposés en série et telle que la sortie du $n^{\text{ème}}$ lit fixe soit reliée à l'entrée du premier.

On doit alors considérer deux cas de procédés en lit mobile simulé suivant la manière dont est reliée la pompe de recyclage (pour les liquides et les fluides supercitiques assez denses pour être pompés) ou le compresseur de recyclage (pour les gaz et les fluides supercritiques non pompables) qui permet d'assurer la circulation liquide dans la boucle des n lits fixes :

A) Dans un premier cas, chaque lit fixe est contenu dans une colonne individuelle et la pompe de recyclage peut se déplacer d'une jonction de colonne à la suivante à la même cadence que celles des points d'injection et de soutirage des fluides entrants et sortants. Dans ce cas (décrit dans les brevets US-A-5093004 et WO-A-93/22022 ), le volume de la ligne amenant le fluide de la sortie d'une colonne à l'entrée de la pompe de recyclage, le volume de la pompe elle-même et le volume de la ligne amenant le fluide du refoulement de la pompe à l'entrée de la colonne suivante (le total de ces trois termes constituant le volume de la boucle de recyclage) sont, comme dans le cas du contre-courant réel, sans conséquence puisque l'on s'arrange pour que ces volumes ne soient occupés que par de l'éluant pur.

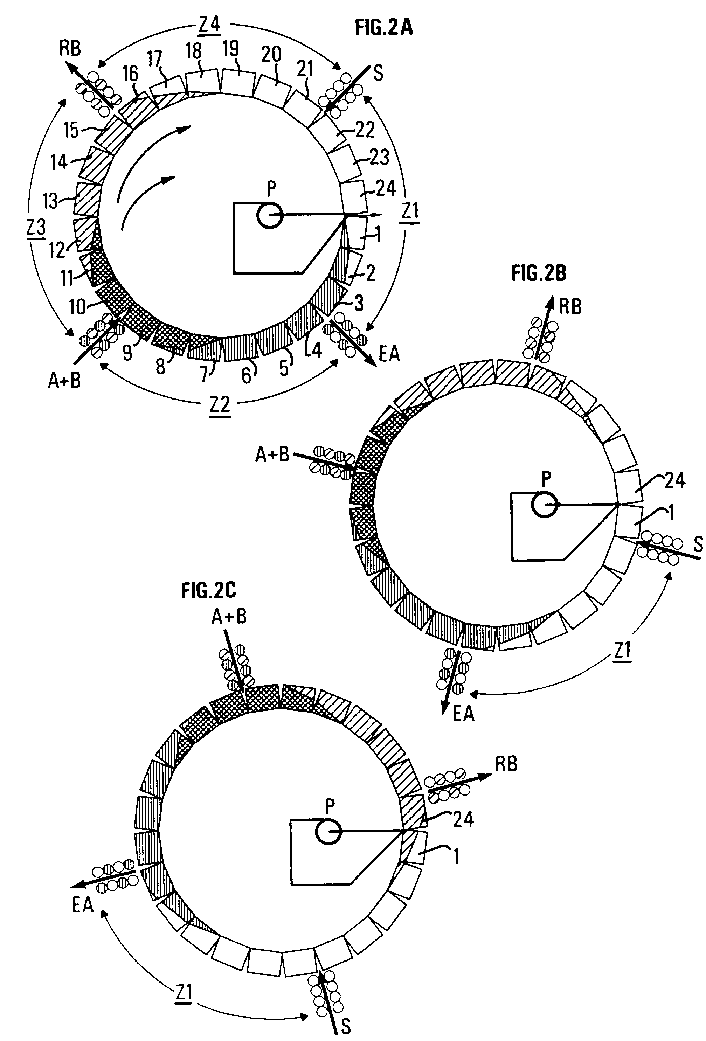

B) Dans un second cas, chaque lit fixe ou tronçon de colonne chromatographique est relié au suivant par une ligne ne pouvant aller que vers ce lit suivant (en particulier quand plusieurs lits fixes sont situés dans la même colonne) sauf le n$^{\text{ème}}$ dont la sortie est reliée à l'aspiration de la pompe P de recyclage, ladite pompe ayant son refoulement connecté au premier des lits fixes (voir Figures 2). Naturellement la numérotation de ces tronçons de colonne est purement arbitraire par convention on considère que le premier a son entrée reliée au refoulement de la pompe de recyclage et que le dernier ou n$^{\text{ème}}$ a sa sortie reliée à l'aspiration de ladite pompe. Dans ce cas, la pompe de recyclage verra passer l'ensemble du profil des concentrations. Le volume mort de cette pompe crée une anisotropie du volume du n$^{\text{ème}}$ lit fixe par rapport aux autres et il en résulte une perturbation des compositions de l'extrait et du raffinat, ce qui entraîne une baisse de pureté et de rendement. De manière générale pour minimiser l'ensemble des volumes morts de la boucle, on s'arrange pour que les lignes de jonction entre les différentes colonnes soient toutes de même volume, ce volume étant de plus réduit au minimum indispensable. Lorsque le fluide dans le système est un gaz recyclé par un compresseur, la perturbation observée est beaucoup plus faible que celle obtenue dans le cas d'un liquide ou d'un fluide supercritique pompable . Pour les gaz à faible pression, ladite perturbation est tout à fait négligeable .

Pour que le procédé fonctionne, il faut un débit différent dans chacune des zones et donc que la pompe (ou le compresseur) de recyclage adopte au cours d'un cycle au moins quatre débits différents . Les changements de consigne de la pompe de recyclage (régulée en débit) ont lieu à chaque fois qu'un des flux entrant ou sortant de la boucle passe d'une position immédiatement antérieure à une position immédiatement postérieure à la pompe de recyclage . Ainsi, lorsque l'injection de l'éluant S passe de la connexion antérieure à la connexion postérieure à la pompe de recyclage, la consigne de cette dernière devient D4 (le débit en zone 4 ). Puis lorsque le soutirage du raffinat RB passe de la connexion antérieure à la connexion postérieure à la pompe de recyclage, la consigne de cette dernière devient D3 (le débit en zone 3 ), avec D3 = D4 + R où R représente le débit de raffinat. Puis lorsque l'injection de charge A+B passe de la connexion antérieure à la connexion postérieure à la pompe de recyclage, la consigne de cette dernière devient D2 (le débit en zone 2 ), avec D2 = D4 + R - C où C représente le débit de charge . Enfin lorsque le soutirage d' extrait EA passe de la connexion antérieure à la connexion postérieure à la pompe de recyclage, la consigne de cette dernière devient D1 (le débit en zone 1 ), avec D1 = D4 + S où S représente le débit de l'éluant.

De manière simplifiée, l'unité peut être représentée comme un ensemble de segments qui, de manière souhaitable seraient tous de même longueur L (ces segments symbolisent les tronçons de colonne). Cependant, à l'un de ces segments on est obligé de rajouter une longueur $\ell$ (c'est ce $\ell$ qui symbolise le volume mort de la boucle de recyclage). Lorsque l'unité est en fonctionnement, un point se déplace le long de ces segments avec une vitesse constante u. Le point dispose d'un temps $\theta$ pour parcourir l'ensemble des n segments et le fonctionnement est optimum lorsque les jonctions des segments sont franchies de manière synchronisée sur des temps multiples de $\theta/n$. Dans le cas idéal (n segments de longueur L) on aurait T = $\theta/n$ = L/u dans le cas d'une unité réelle on se fixe T et $\theta$ en négligeant $\ell$. La longueur totale à parcourir est non plus n.L mais n.L + $\ell$ ; pendant chacune des périodes T, le point parcourt L + $\ell$/n alors qu'il devrait parcourir L pendant les n-1 premières périodes et L + $\ell$ pendant la dernière. Le passage du point aux jonctions des segments n'est plus synchronisé à chaque temps multiple de T mais uniquement aux temps multiples de $\theta$. Pour arriver à cette schématisation, il suffit de diviser le volume V de chacun des tronçons, le volume mort de la boucle de recyclage v et le débit Di dans les tronçons par la section desdits tronçons pour obtenir respectivement L, $\ell$ et u.

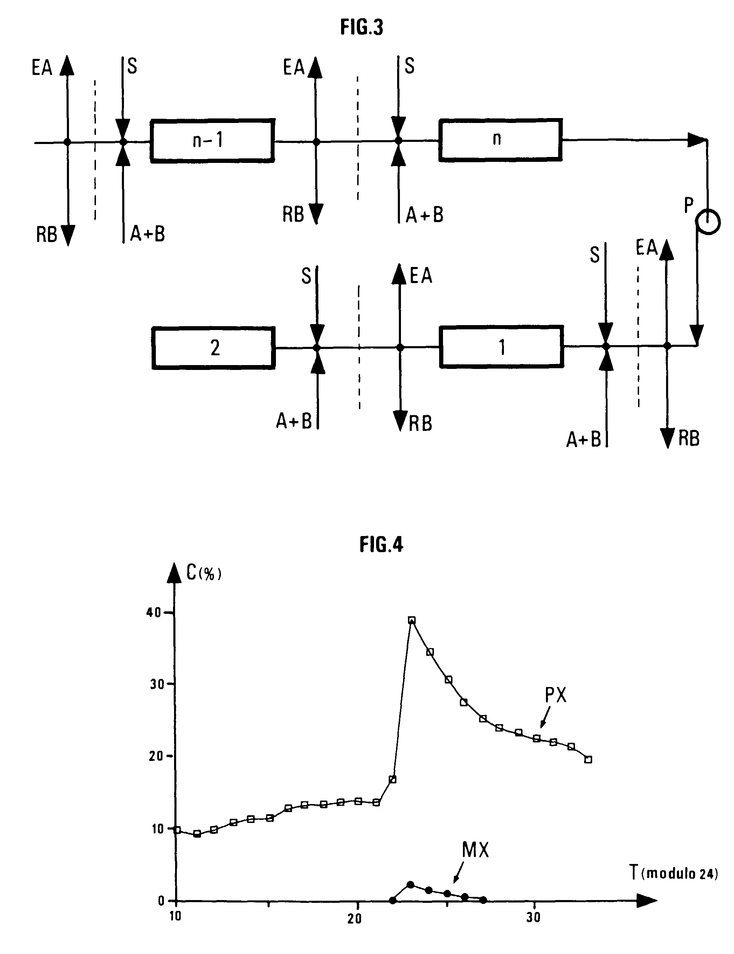

En figure 4, on présente un exemple de la perturbation causée par le volume de la boucle de recyclage sur la composition instantanée de l'extrait prise au même moment de chaque période , période par période, dans un lit mobile simulé à 4 zones et 24 tronçons. Si l'on observe sur plusieurs cycles successifs, on voit que la perturbation admet une périodicité de 24 périodes soit 1 cycle (Proceedings of the 9 th international symposium on preparative chromatography, Nancy april 1992, Balannec-Hotier).

Par ailleurs, la demande de brevet français n°94/05293 décrit un procédé de séparation en lit mobile simulé à débit de recyclage constant bien que la pompe de recyclage ait son aspiration reliée au nème lit fixe et son refoulement relié au premier lit fixe. Donc, elle voit passer l'ensemble des profils de concentration. Dans ce cas les circuits d'introduction et de soutirage dans le système chromatographique sont permutés indépendamment les uns des autres et l'on ne connaît plus une période de permutation unique T mais un tableau

$$\left[ T^i_j \right]$$

des temps de permutation calculé en se basant sur le fait que le volume élué à la sortie de chaque zone doit être constant et équivalent à celui du lit mobile simulé conventionnel équivalent, tel que

$$V_k = D_k \cdot T = \overset{p}{D_k} \left( T^j_{i+1} - T^{j-1}_i \right)$$

où

- Dk représente le débit en zone k dans le lit mobile simulé conventionnel
- T représente la période de permutation du lit mobile simulé conventionnel
- $D^p_k$ représente le débit en zone k dans le lit mobile simulé à débit à recyclage constant lorsque la pompe se trouve en zone p.
- $T^j_{i+1}$ représente l'instant où le flux prélevé ou introduit permute de la sortie du $j^{eme}$ tronçon à la sortie du tronçon suivant, où :

  • j est le numéro du tronçon précédant immédiatement le point d'injection ou de soutirage,
  • i est le nombre de fois dont le plus lent des z circuits a déjà permuté depuis le début du cycle.

Cette relation est basée sur un système idéal où le volume mort de la boucle de recyclage est considéré comme étant négligeable. Cependant, dans la pratique ce type de système se comporte exactement comme un lit mobile simulé conventionnel et il présente les mêmes perturbations dues au volume mort de la boucle de recyclage qui introduit une anisotropie.

D'après ce qui précède, il est donc clair que l'introduction d'une pompe de recyclage et ses connexions entre deux lits particuliers d'une boucle fermée de n lits ou tronçons a pour effet de créer un volume additionnel qui fait apparaître une perturbation des compositions de l'extrait et du raffinat. Dans la pratique industrielle, on connaît des systèmes opérés avec deux pompes de recyclage : l'une régulée en débit, placée entre le nème et le premier lit et l'autre régulée en pression, entre le

$$\left( \frac{n}{2} \right)^{ème} \text{ et le } \left( \frac{n}{2} + 1 \right)^{ème}$$

lit. Dans ce cas, il apparaît évidemment deux anisotropies de volume au lieu d'une. De plus, il est difficile d'assurer à chacun des n lits des propriétés strictement isotropes, et quand bien même cette isotropie serait assurée au moment de la mise en service du système, il est probable qu'au cours du temps tous les lits ne vieillissant pas de la même manière, des différences de comportement entre lits donc des anisotropies de propriétés de séparation de certains lits apparaîtront. Deux exemples viennent à l'appui de ces assertions. Dans les unités de grande taille (plusieurs centaines de $m^3$) utilisées en pétrochimie, chacun des lits de taille identique (typiquement 10 à 20 $m^3$) est chargé par du tamis moléculaire mis en forme de billes de granulométrie 0,3-0,9 mm. Quel que soit le soin apporté au remplissage de chaque lit, on remarque qu'il est difficile d'obtenir un écart de moins de 3 % entre les quantités de tamis chargées respectivement dans le mieux et le moins bien rempli des lits. Dans les unités de taille beaucoup plus modeste (quelques litres) servant par exemple à séparer les énantiomères sur un gel de cellulose modifié (qui est sensible à l'écrasement), le total des pertes de charge dans le système peut aller jusqu'à 10 MPa. On conçoit donc bien qu'au cours du temps, des tassements différents entre le lit opéré à la plus forte pression (au refoulement de la pompe de recyclage) et celui opéré à la plus faible pression (à l'aspiration de cette pompe) peuvent se produire.

Un premier objet de l'invention est donc de remédier à la perturbation de composition de l'extrait et du raffinat causée par le volume mort de la pompe de recyclage située entre le $n^{ème}$ et le premier lit.

Plus généralement, un second objet de l'invention est de remédier aux perturbations de la composition de l'extrait et du raffinat causées par les volumes morts de divers appareils situés entre deux lits consécutifs de la boucle .

Un troisième objet de l'invention est de remédier aux perturbations cycliques de la composition de l'extrait et du raffinat causées par une différence de propriétés de séparation d'un ou de plusieurs lits par rapport aux autres, que cette différence de propriétés en séparation apparaisse dès la mise en service, ou qu'elle soit le résultat d'un vieillissement . Le plus généralement possible, l'objet de l'invention est de remédier aux perturbations cycliques de la composition de l'extrait et du raffinat causées par toute différence de propriétés d'un ou plusieurs lits particuliers de la boucle par rapport aux autres, ces différences de propriétés pouvant notamment être de volume, de quantité de phase adsorbante, de capacité d'adsorption et de sélectivité .

Plus précisément l'invention concerne un procédé de séparation en lit mobile simulé comportant les étapes et les moyens tels que définis dans la revendication 1, avec tout mode préféré tel que défini dans les revendications dépendantes.

L'invention concerne aussi un procédé de séparation en lit mobile simulé comportant les étapes et les moyens tels que définis dans la revendication 2, avec tout mode préféré tel que défini dans les revendications dépendantes.

Selon une autre caractéristique du procédé, la boucle peut comporter un ou plusieurs tronçons dont les propriétés de séparation sont dégradées par rapport à celles des autres tronçons, entraînant ainsi des perturbations dans la composition de l'extrait et dans celle du raffinat.

Chaque fois qu'un courant d'injection ou de soutirage passe d'une position immédiatement antérieure à une position immédiatement postérieure à chacun des tronçons possédant des propriétés de séparation dégradées, on augmente d'abord, d'une valeur appropriée, telle que définie, la durée de connexion dudit courant à la boucle, et ensuite lorsque le courant passe de la position immédiatement postérieure à la connexion du tronçon dégradé, à la position suivante, on diminue ladite durée de connexion, de telle façon que ladite durée reprenne la valeur qui aurait été appliquée si les dégradations de propriétés de séparation avaient été négligées.

L'invention n'est applicable qu'aux conditions suivantes :

- chacun des circuits d'injection et de soutirage est permuté indépendamment des autres. Il en résulte que chacun des flux introduits ou prélevés doit être géré soit par une vanne à n positions soit par n vannes tout ou rien, ces vannes étant de préférence reliées à une centrale de commande.
- Chacune des zones comporte un minimum de deux lits, puisque d'après les moyens mis en oeuvre exposés plus loin, à certains moments particuliers, lorsque la sortie d'une zone passera l'anisotropie dont on veut corriger les effets, cette zone se trouvera raccourcie d'un lit.

On va tout d'abord exposer la manière de procéder lorsque l'on compte seulement l'anisotropie due au volume mort de la boucle de recyclage dans le système. Le problème consiste donc, lorsqu'on adopte la schématisation décrite plus haut, à rétablir une situation telle que le point arrive à la fin de chaque segment à la fin de chacune des périodes du cycle. Le moyen proposé consiste à changer la durée totale du cycle $\theta$ en $\theta'$ tel que $\theta = nT$ et $\theta' = (n - 1) T + T'$. Ce moyen consiste donc à garder constante la vitesse u dudit point, chacun des segments « normaux » sera donc parcouru en un temps $T = L/u$, tandis que le segment plus long sera parcouru en un temps $T' = (L + \ell)/u$. L'image d'un point qui se déplace est une simplification destinée à rendre plus aisée la compréhension du système. En réalité, ce sont autant de points que de zones dans le système qui se déplacent. Comme ces points passent par le segment le plus long à des moments différents du cycle, ils vont se trouver désynchronisés les uns par rapport aux autres, bien que la période de permutation T de base reste identique.

La figure 2 représente un schéma de fonctionnement d'un dispositif à contre-courant simulé où le liquide et le déplacement des commutations s'effectuent dans le même sens (sens des aiguilles d'une montre) . Le dispositif comprend 24 colonnes connectées les unes aux autres, la colonne 24 (n) et la colonne 1 étant reliées par l'intermédiaire d'une pompe fixe de recyclage P . La zone 1 est délimitée entre une injection d'éluant S et un soutirage d'extrait EA, la zone 2 entre le soutirage d'extrait et l'injection de charge A+B, la zone 3 entre l'injection de charge A + B et un soutirage de raffinat RB, et la zone 4 entre le soutirage de raffinat et l'injection d'éluant. A la fin de chaque période, les courants d'injection et de soutirage sont permutés.

Afin de mieux fixer les idées, on suppose un système opéré en contre-courant simulé de 8 lits ou colonnes dont le volume à vide est 80 cm³ chacun, un volume mort de la boucle de recyclage de 10 cm³ et une période de permutation de 100 secondes et l'on définit quatre zones de deux colonnes chacune. Dans la zone 1 comprise entre l'injection d'éluant et le soutirage d'extrait, le débit est 40 cm³/min. Dans la zone 2 comprise entre le soutirage d'extrait et l'injection de charge, le débit est 32,5 cm³/min. Dans la zone 3 comprise entre l'injection de charge et le soutirage de raffinat, le débit est de 37,5 cm³/min. Dans la zone 4 comprise ente le point de soutirage du raffinat et le point d'injection de l'éluant, le débit est de 30 cm³/min. Pendant la première période du cycle qui en compte 8, l'éluant est injecté à l'entrée du lit 1, l'extrait est prélevé à la sortie du lit 2, la charge est injectée à l'entrée du lit 5 et le raffinat est prélevé à la sortie du lit n°6. Les fonctionnements du système sans compensation de volume mort, selon l'art antérieur, et avec la compensation selon l'invention sont comparés respectivement dans les tableaux 1 et 2.

Tableau 1

| Période du cycle | Temps (s) | | Injection d'éluant dans le lit n° | Soutirage d'extrait du lit n° | Injection de charge dans le lit n° | Soutirage de raffinat du lit n° |
|---|---|---|---|---|---|---|
| | sans compensation | | | | | |
| | début | fin | | | | |
| 1 | 0 | 100 | 1 | 2 | 5 | 6 |
| 2 | 100 | 200 | 2 | 3 | 6 | 7 |
| 3 | 200 | 300 | 3 | 4 | 7 | 8 |
| 4 | 300 | 400 | 4 | 5 | 8 | 1 |
| 5 | 400 | 500 | 5 | 6 | 1 | 2 |
| 6 | 500 | 600 | 6 | 7 | 2 | 3 |
| 7 | 600 | 700 | 7 | 8 | 3 | 4 |
| 8 | 700 | 800 | 8 | 1 | 4 | 5 |
| 1 | 800 | 900 | 1 | 2 | 5 | 6 |

La figure 3 montre une variante présentant la succession des tronçons de colonne n, de soutirage d'extrait EA, de raffinat RB et d'injection de la charge AB et d'éluant S entre deux tronçons. De plus, cette figure montre la pompe de recyclage et/ou le moyen de mesure situés immédiatement en amont du soutirage du courant d'extrait EA ou de raffinat RB, ces derniers se situant en amont du lit 1.

## Tableau 2 avec compensation réalisée en pratique

| Période du cycle | Injection dans le lit n° | Eluant Début | Eluant Fin | Soutirage du lit n° | Extrait Début | Extrait Fin | Injection dans le lit n° | Charge Début | Charge Fin | Soutirage du lit n° | Raffinat Début | Raffinat Fin |
|---|---|---|---|---|---|---|---|---|---|---|---|---|
| 1 | 1 | 0 | 117,15 | 2 | 0 | 100 | 5 | 0 | 100 | 6 | 0 | 100 |
| 2 | 2 | 117,15 | 217,15 | 3 | 100 | 200 | 6 | 100 | 200 | 7 | 100 | 200 |
| 3 | 3 | 217,15 | 317,15 | 4 | 200 | 300 | 7 | 200 | 300 | 8 | 200 | 317,15 |
| 4 | 4 | 317,15 | 417,15 | 5 | 300 | 400 | 8 | 300 | 400 | 1 | 317,15 | 417,15 |
| 5 | 5 | 417,15 | 517,15 | 6 | 400 | 500 | 1 | 400 | 517,15 | 2 | 417,15 | 517,15 |
| 6 | 6 | 517,15 | 617,15 | 7 | 500 | 600 | 2 | 517,15 | 617,15 | 3 | 517,15 | 617,15 |
| 7 | 7 | 617,15 | 717,15 | 8 | 600 | 717,15 | 3 | 617,15 | 717,15 | 4 | 617,15 | 717,15 |
| 8 | 8 | 717,15 | 817,15 | 1 | 717,15 | 817,15 | 4 | 717,15 | 817,15 | 5 | 717,15 | 817,15 |

Par référence à la figure 3, on constate que lorsqu'un soutirage passe de la sortie du lit n°7 à la sortie du lit n°8, le volume de la pompe de recyclage s'insère entre la sortie du lit n°8 et le point où le soutirage est effectué. Pourtant la période de permutation est restée identique : 100 secondes. Il en résulte donc une désynchronisation de la position du soutirage par rapport au profil de concentration.

Une compensation idéale mais irréalisable en pratique puisque l'on ne retrouverait pas un même temps de cycle total pour chacun des flux introduits et prélevés, consisterait à chaque fois qu'un flux introduit ou prélevé (délimitant la fin de chacune des zones) "franchit" le volume de la pompe de recyclage, à diviser le volume mort v par le débit Di dans chacune des zones pour trouver la durée $\delta t$ qu'il convient de rajouter à T pour obtenir à chaque fois une compensation parfaite : $T' = T + \frac{v}{Di}$.

La compensation que l'on réalise en pratique, de manière préférée, consiste à diviser le volume mort de la boucle de recyclage par le débit moyen pondéré du système :

$$DM = \left(\sum_i Ci\ Di\right)/n,$$

où Ci et n représentent respectivement le nombre de lits en zone i et le nombre total de lits : soit $\delta t = v/DM$, et ajouter cette durée $\delta t$ à T tel que $T' = T + \delta t$ au moment où l'injection ou le soutirage considéré passe de la position juste antérieure à la position juste postérieure à la pompe de recyclage. De cette manière, on aboutit à un temps de cycle unique, donc à un système viable et à une compensation de 90 % par exemple de la perturbation . Il est normal de ne pas pouvoir réaliser une compensation parfaite puisqu'un volume vide ne peut évidemment pas retarder sélectivement comme le fait un adsorbant les différents constituants de la charge. On peut également remarquer qu'avec $\delta t = v/DM$, les perturbations de composition d'extrait et de raffinat sont toutes deux atténuées de manière équivalente . Il peut être souhaité, par exemple, d'annuler totalement la perturbation de composition de l'extrait (quitte à avoir une perturbation résiduelle du raffinat plus importante). Dans ce cas on choisirait $\delta t = v/D1$ puisque l'extrait est prélevé à la sortie de la zone 1.

Plus généralement, on adopte :

$v/\min(Di) > \delta t > v/\max(Di),$ où $\min(Di)$ et $\max(Di)$ représentent respectivement le plus faible et le plus fort des débits de recyclage (des quatre débits, lorsqu'il y a quatre zones).

Selon une deuxième variante, le mélange fluide peut être un gaz sous pression ou un fluide supercritique peu dense . Dans ce cas, il est véhiculé par un compresseur régulé en débit et éventuellement par au moins un compresseur regulé en pression. Alors, le terme correctif peut être atténué en le multipliant par le rapport des densités de la phase fluide df à la phase adsorbée da.

Dans le cas illustré dans la figure 3, c'est lorsqu'un flux prélevé passe de la sortie du n-1$^{\text{ème}}$ à la sortie du n$^{\text{ème}}$ lit et lorsqu'un flux introduit passe de l'entrée du n$^{\text{ème}}$ à l'entrée du premier lit qu'il faut rajouter $\delta t$ pour rétablir l'isochronicité du déplacement du profil des concentrations par rapport aux injections et soutirages.

Deux autres situations sont également possibles :

Selon une variante non illustrée, les points de soutirage du n$^{\text{ème}}$ lit et ceux d'introduction dans le premier lit peuvent se trouver entre le n$^{\text{ème}}$ lit et la pompe de recyclage dans ce cas, c'est lorsqu'un flux prélevé passe de la sortie du n$^{\text{ème}}$ à la sortie du premier lit et lorsqu'un flux introduit passe de l'entrée du premier à l'entrée du second lit qu'il faut rajouter $\delta t$.

Selon une autre variante non illustrée, les points de soutirage du n$^{\text{ème}}$ lit peuvent se trouver entre le n$^{\text{ème}}$ lit et la pompe de recyclage, tandis que les points d'introduction dans le premier lit peuvent se trouver entre la pompe de recyclage et le premier lit. Dans ce cas, c'est lorsqu'un flux prélevé passe de la sortie du n-1$^{\text{ème}}$ à la sortie du n$^{\text{ème}}$ lit et c'est lorsqu'un flux introduit passe de l'entrée du premier à l'entrée du second lit qu'il faut rajouter $\delta t$..

Plus généralement, si l'on utilise, comme c'est souvent le cas deux ou plusieurs pompes de recyclage, le problème des deux ou plusieurs anisotropies de volume se trouve résolu de la même manière : on augmente de $\delta tj$ la durée de connexion d'un courant d'injection ou de soutirage, lorsque ce dernier franchit un des volumes morts vj suivant la règle énoncée plus haut.

Bien que la principale cause de l'introduction de volumes morts dans un appareil de chromatographie en lit mobile simulé soit la ou les pompe(s) de recyclage, l'introduction d'autres appareils entre deux colonnes particulières produiront les mêmes effets : on peut citer un certain nombre d'appareils de mesure ou d'échantillonnage tels que débitmètre, cuve de spectromètre pour mesure en ligne de composition, by-pass ou boucle d'échantillonnage. Chaque anisotropie particulière, donc chaque volume mort induit par l'introduction d'un appareillage particulier peut être compensé en augmentant d'une durée $\delta tj$ la durée de connexion T de chaque courant d'injection ou de soutirage lorsqu'il franchit un tel volume mort. On a donc la relation :

$T' = T + \delta tj$ où T et T' représentent respectivement la durée de connexion d'un courant d'injection ou de soutirage à une position de la boucle non immédiatement en aval d'un volume mort et la durée de connexion d'un courant d'injection ou de soutirage à une position de la boucle immédiatement en aval d'un volume mort, $\delta$tj représente l'incrément de durée ajouté à T pour corriger les perturbations de composition d'extrait et de raffinat résultant dudit volume mort. La valeur de $\delta$tj est comprise dans l'intervalle calculé selon la relation :

vj/max(Di)<$\delta$tj <vj/min (Di)      où vj représente le volume mort que l'on cherche à compenser, où min(Di) et max(Di) représentent respectivement le plus faible et le plus fort des débits de recyclage du lit mobile simulé conventionnel ou du lit mobile simulé conventionnel équivalent dans le cas d'un lit mobile simulé à débit de recyclage constant. De manière préférée, la valeur de $\delta$tj est calculée suivant la relation :

$\delta$tj = vj / DM, DM étant le débit de recyclage pondéré moyen dans le cas du lit mobile simulé conventionnel et

$\delta$tj = vj / Drcy, Drcy étant le débit de recyclage constant dans le cas du lit mobile simulé à débit de recyclage constant .

Si l'on place les points de soutirage du $n^{ème}$ lit et les points d'injection dans le premier lit entre deux volumes morts ou deux anisotropies distinctes, par exemple la pompe de recyclage et un appareil de mesure ou entre la pompe de recyclage et une ligne plus longue que les autres, on arrive à la situation où l'on devra corriger successivement la période de permutation de $\delta t_1$ puis à la période suivante, de $\delta t_2$ lorsque chacun des flux passera cette série de deux anisotropies de volume .

Selon la variante applicable au gaz sous pression ou au liquide supercritique peu dense, les termes $\delta$tj peuvent être atténués en les multipliant par le rapport des densités de la phase fluide df à la phase adsorbée da.

Selon un autre aspect de l'invention, la correction des anisotropies de propriétés de séparation, résultant soit d'un chargement différent de lit à lit soit d'un vieillissement différent de lit à lit, constitue un problème légèrement différent qui sera cependant résolu au moyen de l'invention, c'est-à-dire la désynchronisation des moments de permutation des différents courants.

Le tamis moléculaire chargé dans les unités pétrochimiques de grande taille opérées selon le principe du lit mobile simulé peut être caractérisé par une densité de chargement optimum et quatre fractions volumiques . Lorsque l'on considère un lit rempli par ce tamis, il s'agit de :

- la fraction de vide intergrain ou porosité de lit,
- la fraction de macroporosité dans les grains ou porosité de grain,
- la fraction de microporosité dans les cristallites ou volume utile ou capacité d'adsorption,
- la fraction inaccessible à tout constituant, ou volume solide.

Pour une zéolithe Y proche de celle des exemples 1 et 2, la valeur de 0,84 g/cm³ a été déterminée. Pour une colonne de 100 cm³, on a déterminé au moyen d'une méthode appropriée (par exemple en anglais "pulse test) que les volumes d'élution respectifs d'un traceur non adsorbé du constituant le moins adsorbé et du constituant le plus adsorbé de la charge à séparer étaient respectivement 57 cm³, 64 cm³ et 75 cm³.

Lors du chargement des lits de l'unité industrielle par pesée des quantités introduites dans chaque lit, on constate par exemple que 22 lits sur 24 présentent une densité de chargement acceptable comprise entre 0,835 g/cm³ et 0,842 g/cm³, qu'un lit présente une densité de 0,830 g/cm3 et qun autre lit présente une densité de 0,823 g/cm³. Par rapport à la densité de chargement optimum, le "rendement" ou "l'efficacité du chargement" a donc été de 98 % pour le tronçon le moins bien chargé . Ce lit particulier va donc se comporter comme un lit de volume 0,98 V suivi d'un volume mort 0,02 V. Si l'on traduit ces chiffres pour la colonne de 100 cm³ sur laquelle on fait la même expérience de pulse test avec le traceur et les deux constituants de la charge on obtiendra des volumes d'élution respectivement de 57,86 cm³, 64,72 cm³ et 75,5 cm³.

Si l'on reprend la démarche développée plus haut dans le cas de la compensation de volume mort, ainsi que les quatre valeurs de débit du lit mobile simulé respectivement 40 cm³/min en zone 1, 32,5 cm³/min en zone 2, 37,5 cm³/min en zone 3, 30 cm³/min en zone 4, ainsi que le temps de permutation de 100 secondes, il est aisé de calculer la correction préférée à appliquer à la période de 100 secondes (tout en gardant les mêmes débits) à chaque fois qu'une connexion passe de la position précédant ce tronçon dont les propriétés en séparation sont dégradées, à la position le suivant :

$$T' = 0{,}98\ T + \frac{0{,}02\ V}{DM}$$

soit

$$T' = 0{,}98 \times 100\ s + \frac{0{,}02 . 100}{\dfrac{40+37{,}5+32{,}5+30}{4 \times 60}}$$

soit

$$T' = 101,45 \text{ s}$$

De manière plus générale, il est possible au cours du fonctionnement d'une unité en lit mobile simulé préalablement compensée de ses diverses anisotropies initiales, de détecter au cours du temps l'apparition d'une périodicité de valeur θ (le temps de cycle) sur les courbes des compositions de l'extrait et du raffinat en fonction du temps. Ce comportement est la signature d'un vieillissement ou d'une dégradation différente sur certains lits par rapport à la moyenne. A condition que la perte globale de performances demeure modérée, on recherchera au moyen d'expériences de courbes de perçages et/ou de pulses quel est le lit incriminé. Au moyen de ces expérimentations, il est possible de remonter aux valeurs des isothermes et des coefficients de transfert qui sont à la base du calcul des débits et du temps de permutation des lits mobiles simulés. En adoptant la méthodologie précédemment exposée (la juxtaposition d'un tronçon de longueur différente mais dont les propriétés de séparation sont isotropes et d'un tronçon vide), il sera donc possible de gommer l'essentiel de la perturbation observée en calculant la valeur préférée de durée de connexion à appliquer aux courants sur le tronçon qui a évolué de manière différente des autres.

En d'autres termes, on peut changer la durée de connexion à la boucle selon la relation :

$$f. T + f' . V/max(Di) < T' < f'. T + f' .V/min(Di)$$

et de manière préférée selon la relation :

$$T' = f. T + f' . V/DM$$

ou selon la relation : T' = f . T + f'. V/Drcy,     où T' , T, max(Di), min(Di), DM et Drcy gardent les mêmes significations qu'auparavant, et où f représente le rapport de la longueur d'un tronçon de propriétés isotropes aux autres tronçons, à la longueur d'un tronçon normal, où V représente le volume vide d'un tronçon et où f' représente le rapport de la longueur du tronçon vide qu'il faut associer au tronçon raccourci mais de propriétés isotropes pour obtenir des propriétés de séparation équivalentes à un tronçon dont les propriétés sont dégradées, à la longueur d'un tronçon normal.

Selon une dernière variante de l'invention, lorsque l'on rencontre simultanément dans une unité un ou plusieurs volumes morts dans la boucle et un ou plusieurs tronçons dont les propriétés de séparation sont dégradées, on cumule chacune des nécéssaires corrections décrites dans l'invention.

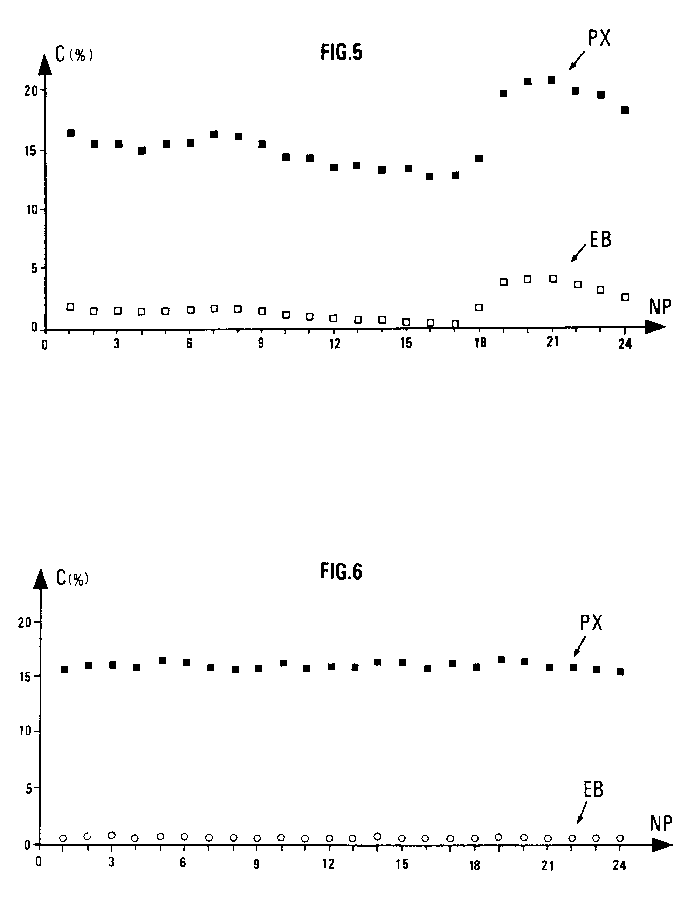

Les exemples qui suivent illustrent l'invention. La figure 5 présente la composition de l'extrait période par période sans aucune compensation. La figure 6 présente le même diagramme lorsque la compensation est effectuée par addition d'un temps δt à la période de permutation de chaque flux lorsque ce dernier passe par la boucle de recyclage.

Exemple 1 (comparatif)

Selon l'art antérieur, on sépare une charge ayant pour composition: ethylbenzène (EB) 12,07 %, paraxylène (PX) 22,95 %, ortho-plus métaxylène (OX + MX) 64,98 %, sur une unité constituée de 24 colonnes de 1 m de longueur et 1 cm de diamètre, opérée en lit mobile simulé à contre-courant. Les lignes et la pompe intercalées entre les colonnes 24 et 1 créent un volume mort de 17,25 $cm^3$. Les débits respectifs de la charge, de l'éluant constitué de toluène sensiblement pur, de l'extrait et du raffinat sont de 1,42 $cm^3$/min, 2,45 $cm^3$/min, 2,05 $cm^3$/min et 1,82 $cm^3$/min. L'adsorbant est une zéolithe Y échangée baryum et potassium telle que celle correspondant à la référence SPX 2000 de la société CECA (France). Les colonnes se répartissent comme suit : 5 en zone 4, 4 en zone 3, 7 en zone 2, 8 en zone 1. Les débits de la pompe de recyclage sont 5 fois en zone 4, 9,1 $cm^3$/min, 4 fois en zone 3, 10,92 $cm^3$/min, 7 fois en zone 2, 9,5 $cm^3$/min et 8 fois en zone 1, 11,55 $cm^3$/min. La période de permutation est de cinq minutes. Pendant la première période du cycle, l'éluant est injecté à l'entrée de la colonne n°1, l'extrait est prélevé à la sortie de la colonne n°8, la charge est injectée à l'entrée de la colonne n°16 et le raffinat est prélevé à la sortie de la colonne n°19. La pureté moyenne obtenue pour le paraxylène dans l'extrait est de 90,70 % et le rendement de 99,90 %. On voit surtout, figure 5, que les compositions d'extrait mesurées période par période sont très variables.

Exemple 2

Selon l'invention, tous les paramètres restant par ailleurs égaux, on impose aux points d'injection et de soutirage le séquençage suivant :

- le point d'injection de l'éluant permute la première fois au bout de 6 min 40 s et les 23 fois suivantes au bout de 5 minutes.
- le point de soutirage de raffinat permute les 5 premières fois au bout de 5 minutes, la 6ème fois au bout de 6 min 40 s et les 18 fois suivantes au bout de 5 minutes.
- le point d'injection de la charge permute les 9 premières fois au bout de 5 minutes, la 10ème fois au bout de 6 min 40 s et les 14 fois suivantes au bout de 5 minutes.
- le point de soutirage d'extrait permute les 16 premières fois au bout de 5 minutes, la 17ème fois au bout de 6 min 40 s et les 7 fois suivantes au bout de cinq minutes.

La durée totale du cycle est passée de 120 minutes à 121 min 40 s. Le débit de la pompe de recyclage est de 9,1 cm$^3$/min pendant les 25 premières minutes (comme précédemment), de 10,92 cm$^3$/min pendant les 20 minutes suivantes (comme précédemment), de 9,5 cm$^3$/min pendant les 35 minutes suivantes (comme précédemment) et enfin de 11,55 cm$^3$/min pendant les 41 min 40 s restantes.

La pureté moyenne obtenue est cette fois égale à 96,71 %, le rendement est de 99,78 % on voit surtout (figure 6) que les compositions d'extrait prises période par période sont extrêmement proches les unes des autres : la différence maximale est divisée par 8. La valeur de $\delta t$ = 1 min 40 s a été obtenue en divisant v = 17,25 cm$^3$ par DM = 10,337 cm$^3$/min . Cette valeur est bien comprise entre 17,25 / 11,55 = 1 min 30 s et 17,25/9,1 = 1 min 54 s.

Exemple 3.

Dans le cas d'un lit mobile simulé à débit de recyclage constant tel que décrit dans la demande de brevet français n°94/05293, puisque la perturbation produite par l'introduction d'un ou de plusieurs volumes morts dans la boucle de recyclage est équivalente à celle observée pour le lit mobile simulé conventionnel équivalent, la correction apportée par addition de $\delta tj$ à la période de permutation d'un flux lorsqu'il passe par la boucle de recyclage, sera également équivalente. Les règles de correction exposées ci-dessus seront donc appliquées exactement de la même manière pour un lit mobile simulé à débit de recyclage constant que pour le lit mobile simulé conventionnel équivalent, que la charge soit liquide supercritique ou gazeux. L'exemple 3 ci-dessous illustre cet aspect de l'invention.

Un lit mobile à contre courant simulé est opéré de la manière suivante : les tronçons de 1 m de longueur et de 1 cm de diamètre sont chargés avec une zéolithe Y équivalente à celle de l'exemple 1. La zone 1 comprend sept tronçons, la zone 5 deux tronçons, la zone 2 compte six tronçons, la zone 3 en comprend quatre, et la zone 4 en contient cinq. Pendant la période 1 du cycle, on injecte l'éluant dans le tronçon n°1, on prélève l'extrait à la sortie du tronçon n°7, on injecte le reflux interne à l'entrée du tronçon n°10, on injecte la charge à l'entrée du tronçon n°16 et l'on prélève le raffinat à la sortie du tronçon n°19. L'éluant est du toluène sensiblement pur, son débit est de 7,5 cm$^3$/min, le débit d'extrait est 7,35 cm$^3$/min. Le débit de reflux interne est de 1,1 cm$^3$/min et sa composition est toluène 0,005 %, ethylbenzène 0,035 %, paraxylène 99,80 %, metaxylène 0,13 %, orthoxylène 0,03 %. Le débit de charge est 4,4 cm$^3$/min et sa composition est toluène 2,29 %, ethylbenzène 10,11 %, paraxylène 23,55 %, metaxylène 49,88 %, orthoxylène 14,16 %, enfin le débit de raffinat est de 5,62 cm$^3$/min (on compte donc 0,22 % de pertes) .Le débit constant appliqué sur la pompe de recyclage est 34 cm3/min et le tableau 3 donne les débits dans les différentes zones en fonction du temps.

TABLEAU 3

| début | fin | Zone 1 | Zone 5 | Zone 2 | Zone 3 | Zone 4 |
|---|---|---|---|---|---|---|
| 0 s | 404,6 s. | 41,5 cm$^3$/min | 34,15 cm$^3$/min | 35,25 cm$^3$/min | 39,65 cm$^3$/min | **34cm$^3$/min** |
| 404,6 s | 777,95 s | 35,85 | 28,5 | 29,6 | **34cm$^3$/min** | 28,35 |
| 777,9 s | 1271,75 s | 40,25 | 32,9 | **34cm$^3$/min** | 38,4 | 32,75 |
| 1271,75 s | 1451,05 s | 41,35 | **34cm$^3$/min** | 35,15 | 39,5 | 33,85 |
| 1451,05 s | 2177,30 s. | **34cm$^3$/min** | 26,65 | 27,75 | 32,15 | 26,5 |

La pompe de recyclage est solidaire du tronçon 24 : c'est-à-dire que les soutirages du tronçon 24 se font après cette pompe, juste avant les injections dans le tronçon n°1. Le volume mort de la boucle de recyclage est de 17,25 cm$^3$ ; il en découle un retard de 30,45 s sur le séquençage normal de chacun des circuits une fois par cycle. Ainsi la première permutation de la vanne de l'éluant (injection tronçon 1 → injection tronçon 2) intervient après 109,85 s et non après 79,4 s, la sixième permutation de la vanne de raffinat (prélèvement tronçon 23 → soutirage tronçon 24) intervient au bout de 529,4 s et non 498,95 s, la dixième permutation de la vanne de charge (injection tronçon 1 → injection tronçon 2) intervient au bout de 891,1 s et non 860,65 s, la seizième permutation de la vanne de reflux interne (injection tronçon 1 → injection tronçon 2) intervient au bout de 1384,65 s et non 1354,2 s la dix-huitième permutation de la vanne d'extrait (prélèvement tronçon 23 → soutirage tronçon 24) intervient au bout de 1580,75 s et non 1550,3 s. Les compositions de l'extrait et du raffinat sont les suivantes :

- Extrait : toluène 71,06 %, paraxylène 28,85 %, métaxylène 0,09 % ;
- Raffinat : toluène 42,02 %, éthylbenzène 7,98 %, paraxylène 0,14 %, métaxylène 38,78 %, orthoxylène 11,08 %.

Le tableau 4 de séquençage des vannes est représenté ci-après.

Tableau 4 :

| Temps de permutation | | | | |
|---|---|---|---|---|
| Sortie Zone 1 vanne extrait | Sortie Zone 5 vanne reflux int | Sortie Zone 2 vanne charge | Sortie Zone 3 vanne Raffinat | Sortie Zone 4 vanne solvant |
| $t_1^7 = 81,35$ | $t_1^9 = 79,45$ | $t_1^{15} = 79,80$ | $t_1^{19} = 80,90$ | $t_1^{24} = 109,85$ |
| $t_2^8 = 162,65$ | $t_2^{10} = 158,90$ | $t_2^{16} = 159,55$ | $t_2^{20} = 161,85$ | $t_2^1 = 189,25$ |
| $t_3^9 = 244,00$ | $t_3^{11} = 238,35$ | $t_3^{17} = 239,35$ | $t_3^{21} = 242,75$ | $t_3^2 = 268,65$ |
| $t_4^{10} = 325,30$ | $t_4^{12} = 317,85$ | $t_4^{18} = 319,15$ | $t_4^{22} = 323,70$ | $t_4^3 = 348,05$ |
| $t_5^{11} = 406,95$ | $t_5^{13} = 397,30$ | $t_5^{19} = 398,95$ | $t_5^{23} = 404,60$ | $t_5^4 = 432,05$ |
| $t_6^{12} = 500,80$ | $t_6^{14} = 491,05$ | $t_6^{20} = 492,90$ | $t_6^{24} = 529,40$ | $t_6^5 = 527,30$ |
| $t_7^{13} = 594,70$ | $t_7^{15} = 586,25$ | $t_7^{21} = 587,90$ | $t_7^1 = 623,80$ | $t_7^6 = 622,55$ |
| $t_8^{14} = 688,60$ | $t_8^{16} = 681,50$ | $t_8^{22} = 682,95$ | $t_8^2 = 718,15$ | $t_8^7 = 717,75$ |
| $t_9^{15} = 782,90$ | $t_9^{17} = 776,70$ | $t_9^{23} = 777,95$ | $t_9^3 = 808,55$ | $t_9^8 = 808,30$ |
| $t_{10}^{16} = 866,75$ | $t_{10}^{18} = 859,35$ | $t_{10}^{24} = 891,10$ | $t_{10}^4 = 892,10$ | $t_{10}^9 = 890,75$ |
| $t_{11}^{17} = 950,60$ | $t_{11}^{19} = 941,80$ | $t_{11}^1 = 973,90$ | $t_{11}^5 = 975,65$ | $t_{11}^{10} = 973,20$ |
| $t_{12}^{18} = 1034,45$ | $t_{12}^{20} = 1024,30$ | $t_{12}^2 = 1056,7$ | $t_{12}^6 = 1059,20$ | $t_{12}^{11} = 1055,65$ |
| $t_{13}^{19} = 1118,30$ | $t_{13}^{21} = 1106,80$ | $t_{13}^3 = 1139,5$ | $t_{13}^7 = 1142,80$ | $t_{13}^{12} = 1138,05$ |
| $t_{14}^{20} = 1202,15$ | $t_{14}^{22} = 1189,25$ | $t_{14}^4 = 1222,25$ | $t_{14}^8 = 1226,35$ | $t_{14}^{13} = 1220,45$ |
| $t_5^{21} = 1286,00$ | $t_{15}^{23} = 1271,75$ | $t_{15}^5 = 1305,05$ | $t_{15}^9 = 1309,90$ | $t_{15}^{14} = 1302,90$ |
| $t_{16}^{22} = 1369,45$ | $t_{16}^{24} = 1384,65$ | $t_{16}^6 = 1383,90$ | $t_{16}^{10} = 1392,35$ | $t_{16}^{15} = 1384,80$ |
| $t_{17}^{23} = 1451,05$ | $t_{17}^1 = 1464,45$ | $t_{17}^7 = 1467,35$ | $t_{17}^{11} = 1478,75$ | $t_{17}^{16} = 1468,05$ |
| $t_{18}^{24} = 1580,75$ | $t_{18}^2 = 1566,25$ | $t_{18}^8 = 1568,75$ | $t_{18}^{12} = 1578,75$ | $t_{18}^{17} = 1566,0$ |
| $t_{19}^1 = 1680,20$ | $t_{19}^3 = 1668,15$ | $t_{19}^9 = 1670,15$ | $t_{19}^{13} = 1678,30$ | $t_{19}^{18} = 1667,80$ |
| $t_{20}^2 = 1779,60$ | $t_{20}^4 = 1769,95$ | $t_{20}^{10} = 1771,60$ | $t_{20}^{14} = 1778,10$ | $t_{20}^{19} = 1769,75$ |
| $t_{21}^3 = 1879,05$ | $t_{21}^5 = 1871,80$ | $t_{21}^{11} = 1873,00$ | $t_{21}^{15} = 1877,9$ | $t_{21}^{20} = 1871,65$ |
| $t_{22}^4 = 1978,50$ | $t_{22}^6 = 1973,60$ | $t_{22}^{12} = 1974,40$ | $t_{22}^{16} = 1977,7$ | $t_{22}^{21} = 1973,55$ |
| $t_{23}^5 = 2077,90$ | $t_{23}^7 = 2075,45$ | $t_{23}^{13} = 2075,85$ | $t_{23}^{17} = 2077,50$ | $t_{23}^{22} = 2075,40$ |
| $t_{24}^6 = 2177,30$ | $t_{24}^8 = 2177,30$ | $t_{24}^{14} = 2177,30$ | $t_{24}^{18} = 2177,30$ | $t_{24}^{23} = 2177,30$ |

**Revendications**

1.  Procédé de séparation en lit mobile simulé, à partir d'une charge (A + B) d'au moins deux constituants, en présence d'au moins un éluant (S), en au moins deux fractions, comportant n colonnes ou tronçons de colonnes chromatographiques montées en série et en boucle fermée, dans lesquelles circule un mélange liquide ou supercritique, la boucle présentant au moins un courant d'injection de la charge, au moins un courant d'injection de l'éluant, au moins un courant de soutirage d'un extrait (EA) et au moins un courant de soutirage d'un raffinat (RB), quatre zones au moins comprenant chacune au moins 2 tronçons, étant déterminées dans lesdites colonnes, chaque zone étant séparée de la suivante par un courant d'injection ou de soutirage, les courants d'injection et de soutirage étant permutés indépendamment les uns des autres et à intervalles de temps programmés tels qu'au bout de n permutations, chacun des courants ait parcouru la totalité de la boucle, la boucle fermée comportant une pompe de recyclage dudit mélange, régulée en débit, et située entre deux colonnes ou tronçons de colonne successifs, éventuellement au moins un moyen de mesure ou d'échantillonnage et éventuellement au moins une pompe de recyclage régulée en pression, ledit moyen de mesure ou d'échantillonnage et/ou la pompe de recyclage régulée en pression étant chacun situé entre deux colonnes ou tronçons de colonne consécutifs, lesdites pompes, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que, chaque fois qu'un courant d'injection ou de soutirage passe d'une position immédiatement antérieure à une position immédiatement postérieure à chacun des volumes morts de la boucle, on augmente d'abord la durée de connexion dudit courant à la boucle, selon les relations :

$$T' = T + \delta tj \qquad et \qquad vj / max(Di) < \delta tj < vj / min(Di),$$

où T et T' représentent respectivement la durée de connexion d'un courant d'injection ou de soutirage à une position de la boucle non immédiatement en aval d'un volume mort et la durée de connexion d'un courant d'injection ou de soutirage à une position de la boucle immédiatement en aval d'un volume mort, $\delta tj$ représente l'incrément de durée ajouté à T pour corriger les perturbations de composition d'extrait et de raffinat résultant dudit volume mort, vj la valeur du jème volume mort, max(Di) et min(Di) représentent respectivement la plus forte et la plus faible des valeurs du débit de recyclage dans un lit mobile simulé conventionnel et ce qu'auraient été ces valeurs pour un lit mobile à débit de recyclage constant (lit mobile simulé conventionnel équivalent) et ensuite lorsque le courant passe de la position immédiatement postérieure au volume mort, à la position suivante, on diminue ladite durée de connexion, de telle façon que ladite durée reprenne la valeur qui aurait été appliquée si le volume mort avait été négligé.

2. Procédé de séparation en lit mobile simulé, à partir d'une charge (A + B) d'au moins deux constituants, en présence d'au moins un éluant (S), en au moins deux fractions, comportant n colonnes ou tronçons de colonnes chromatographiques montées en série et en boucle fermée, dans lesquelles circule un mélange gazeux sous pression ou un fluide supercritique peu dense, la boucle présentant au moins un courant d'injection de la charge, au moins un courant d'injection de l'éluant, au moins un courant de soutirage d'un extrait (EA) et au moins un courant de soutirage d'un raffinat (RB), quatre zones au moins comprenant chacune au moins 2 tronçons, étant déterminées dans lesdites colonnes, chaque zone étant séparée de la suivante par un courant d'injection ou de soutirage, les courants d'injection et de soutirage étant permutés indépendamment les uns des autres et à intervalles de temps programmés tels qu'au bout de n permutations, chacun des courants ait parcouru la totalité de la boucle, la boucle fermée comportant un compresseur de recyclage dudit mélange, régulé en débit, et situé entre deux colonnes ou tronçons de colonne successifs, éventuellement au moins un moyen de mesure ou d'échantillonnage et éventuellement au moins un compresseur de recyclage régulé en pression, ledit moyen de mesure ou d'échantillonnage et/ou le compresseur de recyclage régulé en pression étant chacun situé entre deux colonnes ou tronçons de colonne consécutifs, lesdits compresseurs, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que, chaque fois qu'un courant d'injection ou de soutirage passe d'une position immédiatement antérieure à une position immédiatement postérieure à chacun des volumes morts de la boucle, on augmente d'abord la durée de connexion dudit courant à la boucle, d'une valeur $\delta tj \cdot df / da$, où $\delta tj$ est le paramètre de la revendication 1 et où df est la densité de la phase fluide et da la densité de la phase adsorbée, et ensuite lorsque le courant passe de la position immédiatement postérieure au volume mort, à la position suivante, on diminue ladite durée de connexion, de telle façon que ladite durée reprenne la valeur qui aurait été appliquée si le volume mort avait été négligé.

3. Procédé selon la revendication 1 ou 2, dans lequel l'incrément de durée est défini par les relations :
$\delta tj = vj / DM$ et $\delta tj = vj/Drcy$ où DM représente le débit de recyclage pondéré moyen pour un lit mobile simulé conventionnel et Drcy le débit de recyclage constant pour un lit mobile simulé à débit de recyclage constant.

4. Procédé selon l'une des revendications 1 à 3, dans lequel la boucle comporte éventuellement un ou plusieurs tronçons dont les propriétés de séparation sont dégradées par rapport à celles des autres tronçons, entraînant ainsi des perturbations dans la composition de l'extrait et dans celle du raffinat et dans lequel on change la durée de connexion à la boucle selon la relation :
$f \cdot T + f' V / max(Di) < T' < f \cdot T + f' \cdot V / min(Di)$ et de manière préférée selon la relation :
$T' = f \cdot T + f' \cdot V / DM$ ou selon la relation : $T' = f.T + f'.V/Drcy,$
où T', T, max(Di), min(Di), DM et Drcy gardent les mêmes significations que dans la revendication 1, 2 ou 3, et où f représente le rapport de la longueur d'un tronçon de propriétés isotropes aux autres tronçons à la longueur d'un tronçon normal, où V représente le volume vide d'un tronçon et où f' représente le rapport de la longueur du tronçon vide qu'il faut associer au tronçon raccourci mais de propriétés isotropes pour obtenir des propriétés de séparation équivalentes à un tronçon dont les propriétés sont dégradées, à la longueur d'un tronçon normal .

**5.** Procédé selon l'une des revendications 1 à 3 dans lequel la boucle comprend au moins deux volumes morts distincts entre deux tronçons successifs, les courants de soutirage et les courants d' injection se trouvant entre les volumes morts distincts, et dans lequel on augmente la durée de connexion de chaque courant à chacun des deux tronçons, en fonction des relations de la revendication 1, 2 ou 3.

**6.** Procédé selon l'une des revendications 1 à 5 dans lequel la ou les pompes ou compresseurs de recyclage et/ou le moyen de mesure sont situés immédiatement en aval de la colonne qui les précède et immédiatement en amont du soutirage du courant d'extrait ou de raffinat en amont de la colonne qui les suit.

**7.** Procédé selon l'une des revendications 1 à 5 dans lequel la ou les pompes ou compresseurs de recyclage et/ou le moyen de mesure sont situés immédiatement en aval du soutirage du courant d'extrait ou de raffinat et immédiatement en amont de la colonne qui les suit.

**8.** Procédé selon l'une des revendications 1 à 5 dans lequel la ou les pompes ou compresseurs de recyclage et/ou le moyen de mesure sont situés immédiatement en aval du soutirage du courant d'extrait ou de raffinat et immédiatement en amont du courant d'injection de charge ou de l'éluant.

**9.** Procédé selon l'une des revendications 1 à 8 dans lequel le lit mobile simulé est à contre-courant .

**10.** Procédé selon l'une des revendications 1 à 8 dans lequel le lit mobile simulé est à co-courant .

**11.** Procédé selon l'une des revendications 1 à 10 dans lequel la charge comprend un mélange d'hydrocarbures aromatiques comportant 8 atomes de carbone.


**Patentansprüche**

**1.** Verfahren zum Trennen, im simulierten beweglichen Bett, ausgehend von einer Charge (A + B) wenigstens zweier Bestandteile, in Anwesenheit wenigstens eines Eluierungsmittels (S) in wenigstens zwei Fraktionen, n chromatografische Kolonnen oder Kolonnenabschnitte umfassend, die in Reihe und in geschlossener Schleife angeordnet sind, in welchen ein flüssiges oder überkritisches Gemisch zirkuliert, wobei die Schleife wenigstens einen Injektionsstrom für die Charge, wenigstens einen Injektionsstrom für das Eluierungsmittel, wenigstens einen Strom zum Abzug eines Extraktes (EA) und wenigstens einen Strom zum Abzug eines Raffinates (RB) aufweist, wenigstens vier Zonen, die je wenigstens zwei Abschnitte umfassen und in diesen Kolonnen bestimmt sind, wobei jede Zone von der folgenden durch einen Injektions- oder Abzugsstrom getrennt ist und die Injektions- und Abzugsströme unabhängig voneinander und in programmierten Zeitintervallen derart permutiert werden, daß nach Ende von n Permutationen jeder der Ströme von der Gesamtheit der Schleife durchlaufen wird, wobei die geschlossene Schleife eine Reziklierungspumpe für dieses Gemisch, mengengeregelt umfaßt und zwischen zwei aufeinanderfolgenden Kolonnen oder Kolonnenabschnitten angeordnet, gegebenfalls wenigstens ein Meß- oder Probenahmemittel und gegebenenfalls eine druckgesteuerte Reziklierungspumpe, wobei dieses Meß- oder Probenahmemittel und/oder die druckgesteuerte Reziklierungspumpe je zwischen zwei aneinander anschließenden Kolonnen oder Kolonnenabschnitten angeordnet sind, diese gegebenenfalls vorhandenen Meß- oder Probenahmemittel je ein Totvolumen in der Reziklierungsschleife aufweisen, welches Störungen in der Zusammensetzung des Extrakts und der des Raffinats mitreißt, dadurch gekennzeichnet, daß jedesmal dann, wenn ein Injektions- oder Abzugsstrom von einer unmittelbar vorhergehenden Position in eine unmittelbar nachfolgende Postition bei jedem der Totvolumina der Schleife passiert, man zunächst die Verbindung dieses Stroms mit der Schleife entsprechend den folgenden Bedingungen erhöht:

T' = T + $\delta$tj und vj/max(Di) < $\delta$tj < vj/min(Di)

wo T und T' jeweils die Verbindungsdauer eines Injektions- oder Abzugsstroms mit einer nicht unmittelbar in Strömungsrichtung abwärts befindlichen Schleife eines Totvolumens darstellen und die Verbindungsdauer eines Injektions- oder Abzugsstroms mit einer Postion der unmittelbar in Strömungsrichtung folgenden Schleife eines Totvolumens darstellen, $\delta$tj das Inkrement der zu T hinzugefügten Dauer darstellt, um die Störungen der Extrakt- und Raffinatzusammensetzung zu korrigieren, die aus diesem Totvolumen resultieren, vj der Wert des j-ten Totvolumens ist und max(Di) und min(Di) jeweils den größten und den kleinsten der Werte des Reziklierungsdurchsatzes in einem beweglichen simulierten konventionellen Bett darstellen und dies diese Werte für einen beweglichs Bett mit konstantem Rezyklierungsdurchsatz wären (equivalentes bewegliches simuliertes Bett) und anschließend, wenn der Strom von der Postion unmittelbar hinter dem Totvolumen zur nachfolgenden Position übergeht, man diese Verbindungsdauer derart vermindert, daß diese dauernd den Wert annimmt, der angelegt worden wäre, wäre das Totvolumen vernachlässigt worden.

2. Verfahren zur Trennung im simulierten beweglichen Bett, ausgehend von einer Charge (A + B) von wenigstens zwei Bestandteilen in Anwesenheit wenigstens eines Eloierungsmittels (S) in wenigstens zwei Fraktionen, n chromatografische Kolonnen oder Kolonnenabschnitte umfassend, die in Reihe und in geschlossener Schleife angeordnet sind, in welchen ein gasförmiges Gemisch unter Druck oder überkritisches wenig dichtes Fluid zirkuliert, wobei die Schleife wenigstens einen Injektionsstrom für die Charge, wenigstens einen Injektionsstrom für das Eluierungsmittel, wenigstens einen Abzugstrom für ein Extrakt (EA) und wenigstens einen Abzugstrom für ein Raffinat (RB) aufweist, wobei wenigstens vier Zonen je wenigstens zwei Abschnitte umfassen, in diesen Kolonnen bestimmt sind, wobei jede Zone von der folgenden durch einen Injektions- oder Abzugsstrom getrennt ist, die Injektions- und Abzugsströme unabhängig voneinander und in programmierten Zeitintervallen derart permutiert werden, daß nach Ende von n-Permutationen jeder der Ströme die Gesamtheit der Schleife durchlaufen hat, wobei die geschlossene Schleife einen Reziklierungskompressor für dieses Gemisch, mengengesteuert, umfaßt, der sich zwischen zwei aufeinander folgenden Kolonnen oder Kolonnenabschnitten befindet, gegebenenfalls wenigstens ein Meß- oder Probenahmemittel und gegebenfalls wenigstens ein druckgesteuerter Reziklierungskompressor, wobei das Meß- oder Probenahmemittel und/oder der druckgesteuerte Reziklierungskompressor je zwischen zwei Kolonnen oder aufeinander folgende Kolonnenabschnitte angeordnet ist, wobei die Kompressoren und die gegebenenfalls vorhandenen Meß- oder Probenahmemittel ein Totvolumen in der Reziklierungsschleife aufweisen, welches Störungen in der Zusammensetzung des Extrakts und der des Raffinats mit sich bringt, wobei das Verfahren sich dadurch auszeichnet, daß jedesmal dann, wenn ein Injektionsstrom oder ein Abzugsstrom von einer unmittelbar vorangehenden Stellung in eine unmittelbar dahinter befindliche Stellung an jedem der Totvolumina der Schleife übergeht, man zunächst die Verbindung dieses Stroms mit der Schleife um einen Wert $\delta t_j.df/da$ erhöht, wo $\delta t_j$ der Parameter des Anspruchs 1 ist und wo df die Dichte der fluiden Phase und da die Dichte der absobierten Phase ist und dann, wenn der Strom der unmittelbar hinter dem Totvolumen befindlichen Postion in die folgende Position übergeht, man diese Verbindungsdauer derart vermindert, daß diese Dauer den Wert annimmt, der angelegt worden wäre, wäre das Totvolumen vernachlässigt worden.

3. Verfahren nach Anspruch 1 oder 2, bei dem das Inkrement der Dauer definiert durch die Beziehungen $\delta t_j = v_j/DM$ und $\delta t_j = v_j/Drcy$ wo DM der mittlere gewichtete Reziklierungsdurchsatz für ein konventionelles simuliertes Bett und Drcy der konstante Reziklierungsdurchsatz für ein bewegliches simuliertes Bett mit konstantem Reziklierungsdurchsatz ist.

4. Verfahren nach einem der Ansprüche 1 bis 3, bei dem die Schleife gegebenenfalls einen oder mehrere Abschnitte umfaßt, deren Trenneigenschaften schlechter bezüglich denen der anderen Abschnitte sind und so Störungen in der Zusammensetzung des Extrakts und der des Raffinats herbeiführen und wobei man die Verbindungsdauer zur Schleife gemäß der Beziehung verändert:
$f . T + f' . V / max(Di) < T' < f . T + f' . V /min(di)$ und bevorzugt gemäß der Beziehung:
$T' = f . T + f' . V /DM$ oder nach der Beziehung:
$T' = f . T + f' . V/Drcy$,
wo T', T, max(Di), min(Di), DM und Drcy die gleichen Bedeutungen wie nach den Ansprüchen 1, 2 oder 3 haben und wo f das Verhältnis der Länge eines Abschnittes mit isotropen Eingenschaften zu den anderen Abschnitten bei Länge eines Normalabschnittes haben, wo V das hohle Volumen eines Abschnitts und wo f' das Verhältnis der Länge des hohlen Abschnittes darstellt, der dem verkürzten Abschnitt zugeordent werden muß, jedoch von isotropen Eigenschaften ist, um Eigenschaften equivalent zu einem Abschnitt zu erhalten, dessen Eigenschaften auf die Länge eines normalen Abschnitts abgebaut sind.

5. Verfahren nach einem der Ansprüche 1 bis 3, bei dem die Schleife wenigstens zwei unterschiedliche Totvolumina zwischen zwei aufeinder folgenden Abschnitten umfaßt, die Abzugsströme und die Injektionsströme sich zwischen den unterschiedlichen Totvolumina befinden und wobei man die Verbindungsdauer jedes Stroms mit jedem der beiden Abschnitte als Funktion der Beziehungen der Ansprüche 1, 2 oder 3 erhöht.

6. Verfahren nach einem der Ansprüch 1 bis 5, bei dem die Pumpe(en) oder Kompressoren zu Rezyklierung und/oder das Meßmittel unmittelbar hinter der ihnen vorhergehenden Kolonne und unmittelbar vor dem Abziehen des Extraktions- oder Raffinatstroms vor der Kolonne die ihnen folgt, angeordnet sind.

7. Verfahren nach einem der Ansprüche 1 bis 5, bei dem die Pumpe(en) oder der Rezikierung dienende Kompressoren und/oder das Meßmittel unmittelbar hinter dem Abzug für den Extrakt- oder Raffinatstrom und unmittelbar vor der ihnen folgenden Kolonne angeordnet sind.

8. Verfahren nach einem der Ansprüche 1 bis 5, bei dem die Pumpe (en) oder der Rezikierung dienende Kompressoren und/oder das Meßmittel unmittelbar hinter dem Abzug des Extrakts- oder Raffinatstroms und unmittelbar vor dem Injektionsstrom der Charge oder des Eluierungsmittels angeordnet sind.

9. Verfahren nach einem der Ansprüche 1 bis 8, bei dem das simulierte bewegliche Bett vom Gegenstromtyp ist.

10. Verfahren nach einem der Ansprüch 1 bis 8, bei dem das simulierte bewegliche Bett vom Gleichstromtyp ist.

11. Verfahren nach einem der Ansprüche 1 bis 10, bei dem die Charge ein Gemisch aus aromatischen Kohlenwasserstoffen mit 8 Kohlenstoffatomen umfaßt.

**Claims**

1. A process for the simulated moving bed separation of a feed (A+B) containing at least two constituents in the presence of at least one eluent (S) into at least two fractions, comprising n chromatographic columns or column sections mounted in series and in a closed circuit, in which a liquid or supercritical mixture circulates, the circuit having at least one feed injection stream, at least one eluent injection stream, at least one extract extraction stream (EA) and at least one raffinate extraction stream (RB), at least four zones each comprising at least two sections being determined in said columns, each zone being separated from the following zone by an injection or extraction stream, the injection and extraction streams being independently shifted at programmed time intervals such that after n shifts, each stream has traversed the whole circuit, the closed circuit comprising a recycling pump for said mixture, which is flow rate regulated and located between two successive columns or column sections, optionally at least one measuring or sampling means and optionally at least one recycling pump which is pressure regulated, said measuring or sampling means and/or the pressure regulated recycling pump each being located between two consecutive columns or column sections, said pumps and said measuring or sampling means optionally present each having a dead volume in the recycling circuit which causes perturbations in the extract and in the raffinate composition, the process being characterised in that, each time that an injection or extraction stream passes from an immediately anterior position to an immediately posterior position to each of the dead volumes in the circuit, the connection period for said stream to the circuit is first increased increased in accordance with the relationships:

$T' = T + \delta tj$ and $vj/max(D_i) < \delta tj < vj/min(D_i)$,

where T and T' respectively represent the connection period for an injection or extraction stream to a position in the circuit which is not immediately downstream of a dead volume and the connection period for an injection or extraction stream at a position immediately downstream of a dead volume, $\delta tj$ represents the incremental period added to T to correct the perturbations in the composition of the extract and raffinate resulting from said dead volume, vj represents the dead volume, $max(D_i)$ and $min(D_i)$ respectively represent the highest and the lowest recycle flow rates for the conventional simulated moving bed and which would have been these values for a simulated moving bed with a constant recycle flow rate (or equivalent conventional simulated moving bed), and then when the stream passes from the immediately posterior position to the dead volume to the following position, said connection period is reduced so that said period regains the value which would have been applied if the dead volume had been ignored.

2. A process for the simulated moving bed separation of a feed (A+B) containing at least two constituents in the presence of at least one eluent (S) into at least two fractions, comprising n chromatographic columns or column sections mounted in series and in a closed circuit, in which a pressurized or gaseous mixture or a less dense supercritical fluid circulates, the circuit having at least one feed injection stream, at least one eluent injection stream, at least one extract extraction stream (EA) and at least one raffinate extraction stream (RB), at least four zones each comprising at least two sections being determined in said columns, each zone being separated from the following zone by an injection or extraction stream, the injection and extraction streams being independently shifted at programmed time intervals such that after n shifts, each stream has traversed the whole circuit, the closed circuit comprising a recycling compressor for said mixture, which is flow rate regulated and located between two successive columns or column sections, optionally at least one measuring or sampling means and optionally at least one recycling compressor which is pressure regulated, said measuring or sampling means and/or the pressure regulated recycling compressor each being located between two consecutive columns or column sections, said compressors and said measuring or sampling means optionally present each having a dead volume in the recycling circuit which causes perturbations in the extract and in the raffinate composition, the process being characterised in that, each time that an injection or extraction stream passes from an immediately anterior position to an immediately posterior position to each of the dead volumes in the circuit, the connection period for said stream to the circuit is first increased by a value of $\delta tj.df/da$, where $\delta tj$ is the parameter in claim 1 and df is the density of the fluid phase, da being the density of the adsorbed phase, and then when the stream passes from the immediately posterior position to the dead volume to the following position, said connection period is reduced so that said period regains the value which would have been applied if the dead volume had been ignored or the degradation in the separation properties had been ignored.

3. A process according to the claim 1 or 2, in which the incremental period is defined by the relationships:
$\delta tj = vj/DM$ and $\delta tj = vj/Drcy$, where DM is the average weighted recycle flow rate in the case of conventional simulated moving bed, and Drcy is the constant recycle flow rate in the case of a simulated moving bed with a constant recycle flow rate.

4. A process according to any one of claims 1 to claim 3, in which the circuit optionally contains one or more sections whose separation properties are degraded compared with those of other sections, thus causing perturbations in the composition of the extract and of the raffinate and which the connection period to the circuit is changed according to the relationship:

$$f.T + f'.V/max(D_i) < T' < f.T + f'.V/min(D_i)$$

and preferably in accordance with the relationship:

$$T' = f.T + f'.V/DM$$

or in accordance with the relationship:

$$T' = f.T + f'.V/Drcy,$$

where T', T, max($D_i$), min($D_i$), DM and Drcy have the same meanings as those given in claims 1 and 3, and where f represents the ratio of the length of one section with isotropic properties to the other sections, to a normal section length, where V represents the void volume of a section and where f' represents the ratio of the length of a void section which must be associated with the shortened section with isotropic properties to obtain the equivalent separation properties to a section whose properties are degraded, to a normal section length.

5. A process according to any one of claims 1 to 3, in which the circuit comprises at least two distinct dead volumes between two successive sections, the extraction and injection streams being between the distinct dead volumes, and in which the connection period for each stream is increased at each of two sections in accordance with the relationships in claim 1, 2 or 3.

6. A process according to any one of claims 1 to 5, in which the recycling pump(s) or compressor(s) and/or the measuring means are located immediately downstream of the column preceding them and immediately upstream of the extract or raffinate extraction stream upstream of the column following them.

7. A process according to any one of claims 1 to 5, in which the pump(s) or compressor(s) and/or the measuring means are located immediately downstream of extract or raffinate extraction stream and immediately upstream of the column following them.

8. A process according to any one of claims 1 to 5, in which the pump(s) or compressor(s) and/or the measuring means are located immediately downstream of the extract or raffinate extraction stream and immediately upstream of the feed or eluent injection stream.

9. A process according to any one of claims 1 to 8, in which the simulated moving bed is in counter-current mode.

**10.** A process according to any one of claims 1 to 8, in which the simulated moving bed is in co-current mode.

**11.** A process according to any one of claims 1 to 10, in which the feed comprises a mixture of aromatic hydrocarbons containing 8 carbon atoms.

# FIG.1

FIG.2A

FIG.2B

FIG.2C

**FIG.3**

**FIG.4**

FIG.5

FIG.6